# EUROPEAN PATENT APPLICATION

(11) **EP 2 647 283 A1**
(43) Date of publication of application: **09.10.2013**
(21) Application number: 11844098.1
(22) Date of filing: 29.11.2011
(51) Int. Cl.: A01K 29/00

(54) **PLAY EQUIPMENT FOR CATS**

(30) Priority: 03.12.2010 JP 2010270968
(71) Applicant: Tarky Co. Ltd., Osaka 570-0002 (JP); Earth Chemical Co., Ltd., Tokyo 101-0048 (JP)
(72) Inventor: NONOGUCHI, Seiji, Moriguchi-shi Osaka 570-0002 (JP); SUZUE, Mitsuyoshi, Tokushima-shi Tokushima 7710130 (JP); NAKATA, Tsuyoshi, Moriguchi-shi Osaka 570-0002 (JP)
(74) Representative: Haley, Stephen
(86) International application number: PCT/JP2011/077465
(87) International publication number: WO 2012/073925

(57) **Abstract**

Provided is a cat playing tool expected as an optimum communication tool between cats and people, employing means for optimally producing both of a relaxing effect obtained by an *Actinidia polygama* powder and an effect of deodorizing bad odor by a deodorant component.

A cat playing tool 100 includes a printed layer Lp having an *Actinidia polygama* powder Sp, a deodorant component Dp, and a binder Bm applied thereto, and is configured so that the above-described printed layer Lp is held by at least one of two sheets (a first sheet St or Sb and a second sheet Sb or St) and that the above-described first sheet St or Sb and the above-described second sheet Sb or St are joined together at the peripheries thereof so as to form a bag shape holding the above-described printed layer Lp therein.

## Description

### Field

The present invention relates to a cat playing tool, and more particularly, to a cat playing tool having both a relaxing effect obtained by *Actinidia polygama* and an effect of deodorizing a bad odor by a deodorant component. Background

Various products taking advantage of *Actinidia polygama,* known as a cat's favorite, have been conventionally proposed or put to practical use. For example, those include: a material for treating excrement, serving to inhibit a cat's kicking action after urination by utilizing *Actinidia polygama* (Patent Literature 1); a cat scratcher attracting a cat's attention strongly with *Actinidia polygama* (Patent Literature 2); a relaxing sheet for cats, made of a non-woven cloth or a cotton cloth coated with a mixture of *Actinidia polygama* powder and a binder (Patent Literature 3); and a cat scratcher impregnated with an *Actinidia polygama* extract and an insect repellent (Patent Literature 4). Litter with *Actinidia polygama* helpful for cat toilet training, or the like, also has been commercialized.

### Citation List

### Patent Literature

Patent Literature 1: Japanese Patent Application Laid-Open No. 2001-169678
Patent Literature 2: Japanese Patent Application Laid-Open No. 2003-210061
Patent Literature 3: Japanese Registered Utility Model No. 3119260
Patent Literature 4: Japanese Registered Utility Model No. 3038155

### Summary

### Technical Problem

However, the material for treating excrement or the scratchers mentioned above are intended to restrict or guide cat actions at people's convenience. They are not things with which cats can play together with people such as their owners or independent of people while giving cats pleasure. Moreover, under circumstances where odor emanating from cats is being a major problem for people staying together with cats, the above-mentioned relaxing sheet or scratchers are expected to offer a relaxing effect or an insect-repelling effect, however, measures for odor emanating from cats are not considered. Moreover, although it may be possible with the above-described techniques to know, by analogy, a product having both a relaxing effect obtained by *Actinidia polygama* and an effect of deodorizing a bad odor by a deodorant component, means for optimally producing both of a relaxing effect and a deodorizing effect is unknown. Thus, an object of the present invention is to provide a cat playing tool, which gives cats pleasure by utilizing *Actinidia polygama,* which provides comfort also to people living together with cats, and which is expected to be an optimum communication tool between cats and people.

### Solution to Problem

In order to achieve the above-described object, the cat playing tool according to the present invention includes a printed layer prepared by applying an *Actinidia polygama* powder, a deodorant component, and a binder, and is configured such that the above-described printed layer is held by at least one of two sheets, and the two sheets are preferably joined together at the peripheries thereof so as to form a bag shape holding the above-described printed layer therein. Advantageous Effects of Invention

The present invention can provide a cat playing tool which gives cats pleasure, with which cats can play with or without people, which provides comfort also to people, and which serves as an optimum communication tool between cats and people.

### Brief Description of Drawings

FIG. 1 is a perspective view schematically showing a shape of a cat playing tool according to an embodiment of the present invention.
FIG. 2 is a cross-sectional view of a main part of the cat playing tool in FIG. 1.
FIG. 3 shows diagrams illustrating measured waveforms of brain waves of a cat placed on sheets to which the *Actinidia polygama* powder is applied according to the present invention.
FIG. 4 shows diagrams illustrating the occurrence frequencies of alpha waves based on the waveforms of the brain waves shown in FIG. 3.
FIG. 5 is a diagram showing relationships between printed surfaces of the *Actinidia polygama* powder and odor intensities of *Actinidia polygama* according to the present invention.
FIG. 6 is a diagram showing influences due to differences in the blending ratio of a deodorant component on the odor intensities of *Actinidia polygama* according to the present invention.
FIG. 7 is a diagram showing relationships between binders and fixation strengths of the *Actinidia polygama* powder according to the present invention.
FIG. 8 shows diagrams illustrating effects of deodorizing cat odor by the deodorant component according to the present invention.
FIG. 9 is a diagram showing soothing effects given to cats by the odor of *Actinidia polygama* according to the present invention.
FIG. 10 shows a diagram illustrating residual ratios of the *Actinidia polygama* odor over time according to the present invention.
FIG. 11 is a diagram showing an example of possible shapes for the cat playing tool according to the present invention.
FIG. 12 is a diagram showing influences due to differences in the deodorant component on odor intensities of *Actinidia polygama* according to the present invention.
FIG. 13 is a diagram showing influences of the *Actinidia polygama* odor on cat actions according to the present invention.
FIG. 14 is a diagram showing the effects of deodorizing cat odor by the deodorant components according to the present invention (sensory evaluation).
FIG. 15 is an analysis chart for the case of the *Actinidia polygama* powder alone by means of a gas chromatography.
FIG. 16 is an analysis chart for the case of a deodorant component derived from a natural plant alone by means of a gas chromatography.
FIG. 17 is an analysis chart for the case of a mixture of the *Actinidia polygama* powder and the deodorant component derived from the natural plant by means of a gas chromatography.
FIG. 18 is an analysis chart for the case of a mixture of the *Actinidia polygama* powder and activated carbon by means of a gas chromatography.

### Description of Embodiments

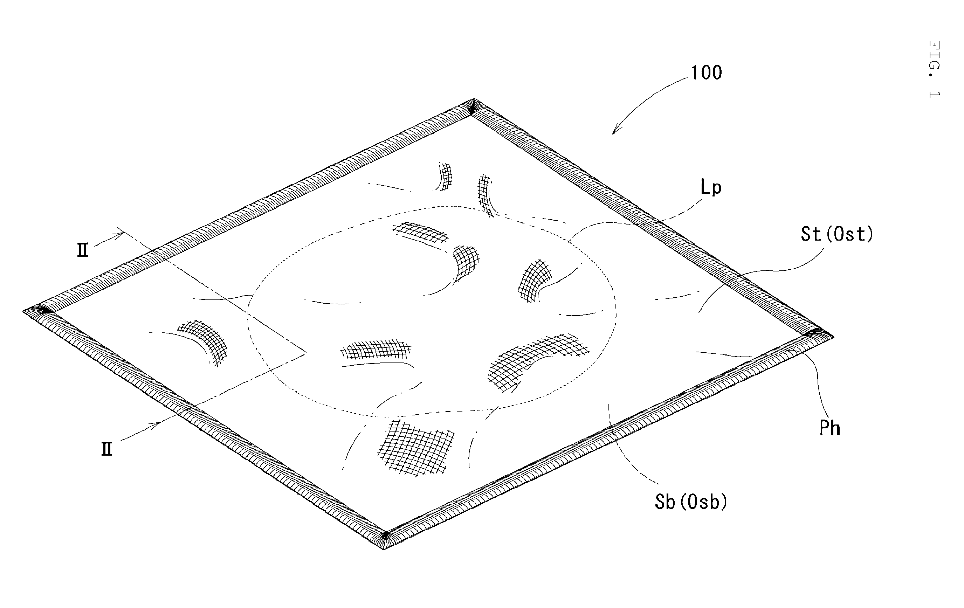

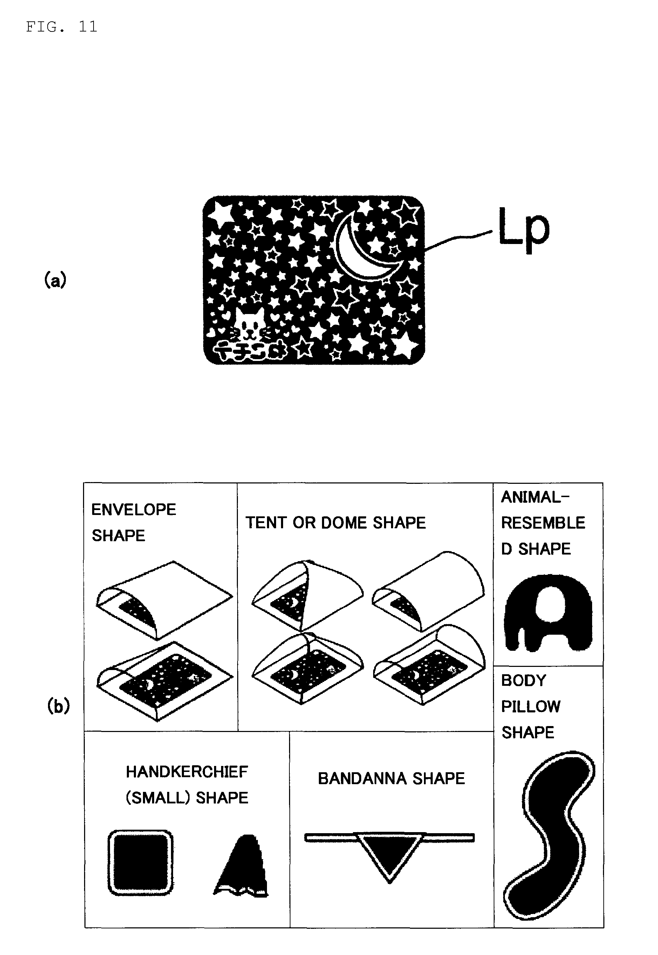

As shown in FIG. 1, a cat playing tool 100 according to an embodiment of the present invention is configured in a flat mat shape. Note that while FIG. 1 shows an example in which the cat playing tool 100 has a rectangular shape, it can be configured to have any shape such as a circle or a triangle. The cat playing tool 100 can also be configured to have a shape other than a mat shape. A description thereof will be given later specifically with reference to FIG. 11.

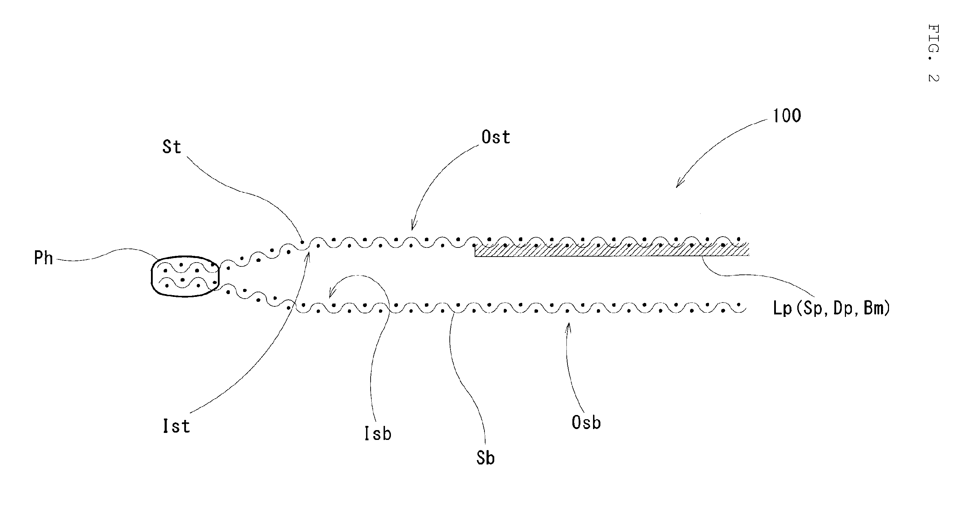

With reference to a cross-sectional view of FIG. 2 cut along a line II-II in FIG. 1, a configuration of the cat playing tool 100 will be described. The cat playing tool 100 includes: two sheets St and Sb preferably having the same shape and the same size; a printed layer Lp; and a hem portion Ph. For ease of explanation, one of the two sheets St and Sb positioned on the upper side in FIG. 2 is referred to as a front sheet St and the other sheet positioned on the lower side thereof is referred to as a back sheet Sb.

In order to make the cat playing tool 100 have a bag shape, the peripheries of the front sheet St and the back sheet Sb are fixed to each other by means of the hem portion Ph with the front sheet St and the back sheet Sb being faced to each other. Surfaces of the front sheet St and the back sheet Sb facing to each other in a state of the bag-shape, i.e., inner surfaces of the bag are referred to as a front sheet inner surface Ist and a back sheet inner surface Isb, respectively. Outer surfaces of the bag are referred to as a front sheet outer surface Ost and a back sheet outer surface Osb.

The printed layer Lp is applied, by means of screen printing or the like, to the inner surface and outer surface of at least one of the front sheet St and the back sheet Sb, preferably at least one of the front sheet inner surface Ist and the back sheet inner surface Isb. The printed layer Lp includes: *Actinidia polygama* powder Sp containing at least one of matatabilactone, actinidin, iridomyrmecin, and nepetalactone, which are odor components of *Actinidia polygama;* a deodorant component Dp for eliminating cat's body odor; and a binder Bm used to bind the *Actinidia polygama* powder Sp and the deodorant component Dp together and having a function to make them adhered to the front sheet inner surface Ist or the back sheet inner surface Isb. The *Actinidia polygama* powder Sp, the deodorant component Dp, and the binder Bm will be described later in detail.

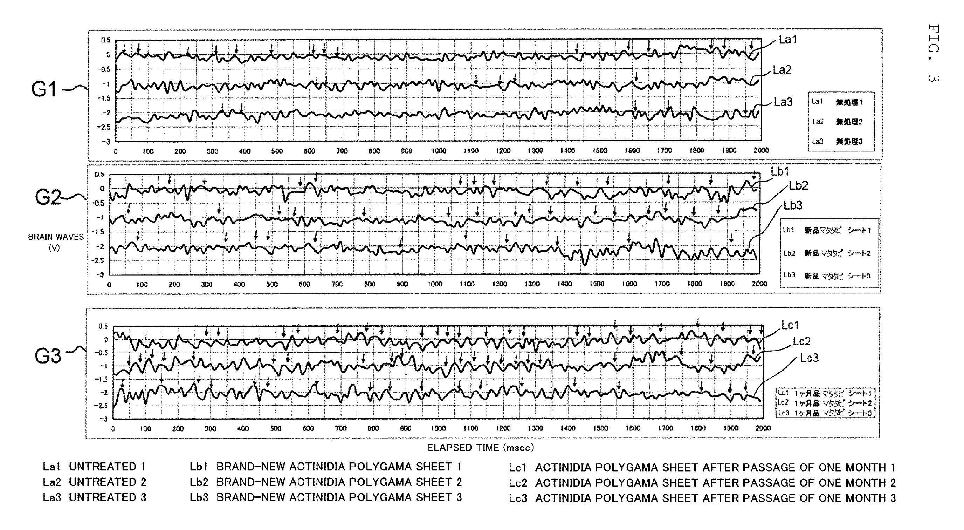

If the thus configured cat playing tool 100 is given to a cat, the cat is attracted to the odor of *Actinidia polygama* breathed from the *Actinidia polygama* powder Sp in the printed layer Lp through the front sheet St or the back sheet Sb. Consequently, the cat fiddles with the cat playing tool 100 having a mat shape, stays on the cat playing tool 100 by choice, or even falls asleep thereon. Effects of the *Actinidia polygama* odor on cats will be described later in detail with reference to FIGS. 3, 4, and 9. With the cat playing tool 100, owners can attract their cats, play with the cats, or keep the cats playing around them. Furthermore, by giving the cat playing tool 100 to a cat, the cat can play with it by oneself.

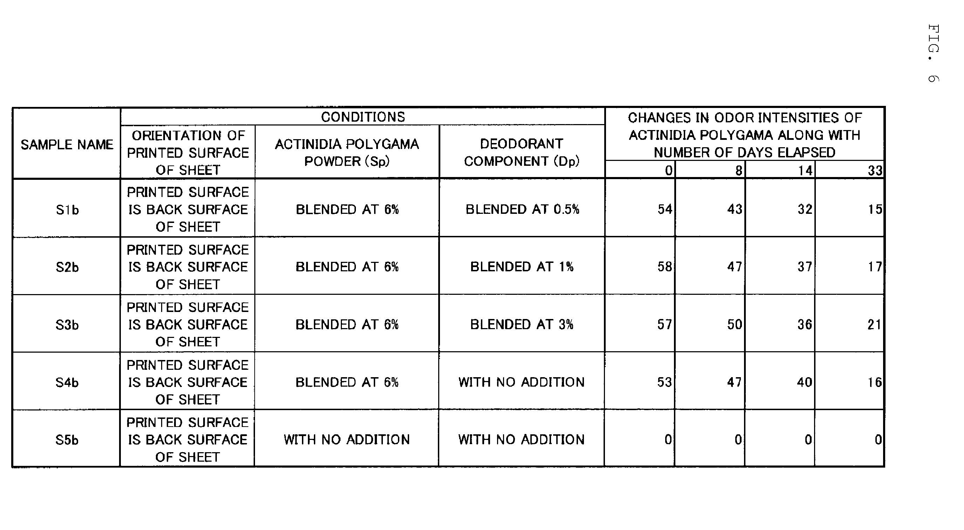

If a cat continues to play with the cat playing tool 100, the cat playing tool 100 absorbs cat odor in the course of time and starts smelling unfavorably for people. However, a deodorant component emanated from the deodorant component Dp in the printed layer Lp through the front sheet St or the back sheet Sb can eliminate the cat odor without spoiling the odor of *Actinidia polygama.* Thus, the cat playing tool 100 can be used in a room with comfort over a long period of time. Deodorizing effects and durations depending on differences in the blending ratio of the deodorant component Dp will be described later in detail with reference to FIG. 6.

As described above, in order to allow the odor of *Actinidia polygama* from the *Actinidia polygama* powder Sp and a deodorant component from the deodorant component Dp to be emanated, at least one of the front sheet St and the back sheet Sb needs to have breathability. For example, a resin film provided with a predetermined number of small ventilation holes, or the like, may be used. Moreover, in order for a cat to fiddle with the cat playing tool 100, at least one of the front sheet St and the back sheet Sb is preferably made of a cloth or fabric a cat can catch with its claws. Moreover, in light of the effect obtained by the odor of *Actinidia polygama* and the deodorizing effect, a more amount of the printed layer Lp need to be applied in a reliable manner. In order to achieve this, at least the front sheet St and the back sheet Sb each as a surface for holding the printed layer Lp, preferably the front sheet inner surface Ist and the back sheet inner surface Isb, are preferred to have a rougher state than a flat surface and more preferred to have a sterically-complicated shape. In other words, the front sheet St or the back sheet Sb is preferably a cloth or a fabric. Although a non-woven cloth is also preferable in respect of its breathability and its application properties of the printed layer Lp, it requires durability against scratching by cat's claws. In view of the above-described problem, it is preferable that the printed layer Lp be held on the inner surfaces of the front sheet St and the back sheet Sb. Note that a natural fiber such as cotton, hemp, silk, or wool or a synthetic fiber such as an acrylic fiber, a polyester fiber, a polyvinyl alcohol fiber, a polypropylene fiber, a polyamide fiber, or nylon can be used as the front sheet St or the back sheet Sb. Furthermore, a composite fiber of a natural fiber and a synthetic fiber can also be employed.

In order to prevent a cat from putting its hand inside the bag of the cat playing tool 100 with the printed layer Lp being applied therein, the hem portion Ph strongly fixes the peripheries of the front sheet St and the back sheet Sb together by means of lock stitching or the like. However, as long as it is possible to accomplish an aim of protecting the printed layer Lp applied to an inner wall of the cat playing tool 100 from cats, the peripheries of the front sheet St and the back sheet Sb may be simply stitched together or bonded together with an adhesive instead of the hem portion Ph. Alternatively, the front sheet St and the back sheet Sb may be obtained, not as separate two sheets, but by folding back one long sheet. Also, the front sheet St and the back sheet Sb may have a bag shape with one side thereof being opened.

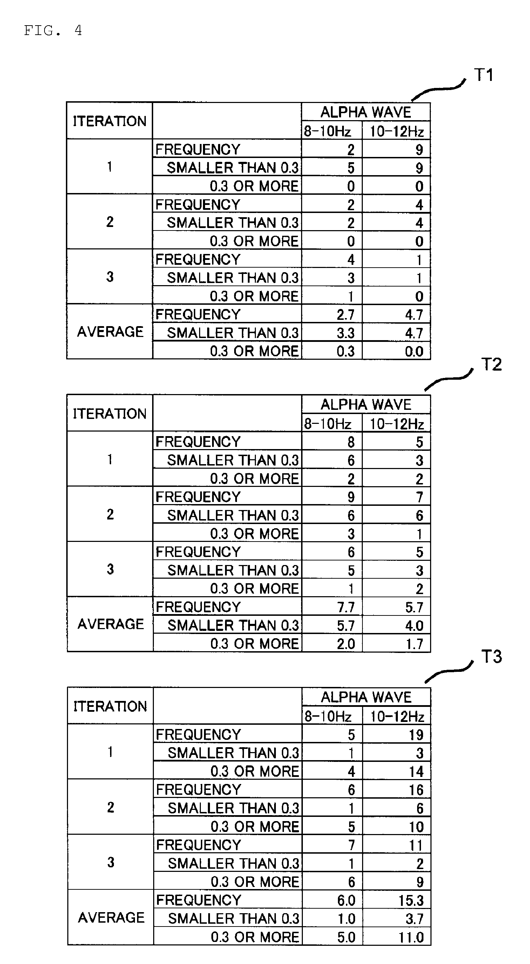

Next, the effects of the *Actinidia polygama* odor on cats will be described specifically with reference to FIG. 3 and FIG. 4. In FIG. 3, a vertical axis (V) of three graphs G1, G2, and G3 shows measurement results of cat brain waves, and a horizontal axis thereof shows elapsed time (msec). Note that the graph G1 shows the state of cat brain waves when a cat was placed on an ordinary mat other than the cat playing tool 100 (without the printed layer Lp). The graph G2 shows the state of cat brain waves when the cat was placed on the cat playing tool 100 in a brand-new state. The graph G3 shows the state of cat brain waves when the cat was placed on the cat playing tool 100 obtained after the passage of one month for use from the brand-new state. Moreover, the reason why each graph has three lines of measurement results is that the measurement was conducted three times and the results thereof were displayed while being shifted in a longitudinal direction so that they are readily visible. Specifically, La1, La2, and La3 represent the results of three measurements on brain waves when a particular cat was placed on an ordinary mat without the printed layer Lp. The La2 and the La3 are displayed while being shifted respectively by 1 V along the vertical axis. The same thing applies also to Lb1 to Lb3 and Lc1 to Lc3. Note that all of these are the measurement results on the same cat.

In FIG. 4, Table T1, Table T2, and Table T3 show alpha wave occurrence frequencies in the measured cat brain waves corresponding to the graph G1, the graph G2, and the graph G3, respectively. It can be confirmed from FIG. 3 and FIG.4 that the cat released more alpha waves with the cat playing tool 100 having been used for one month, i.e., the cat was more relaxed on that cat playing tool 100, than with the cat playing tool 100 in a brand-new state.

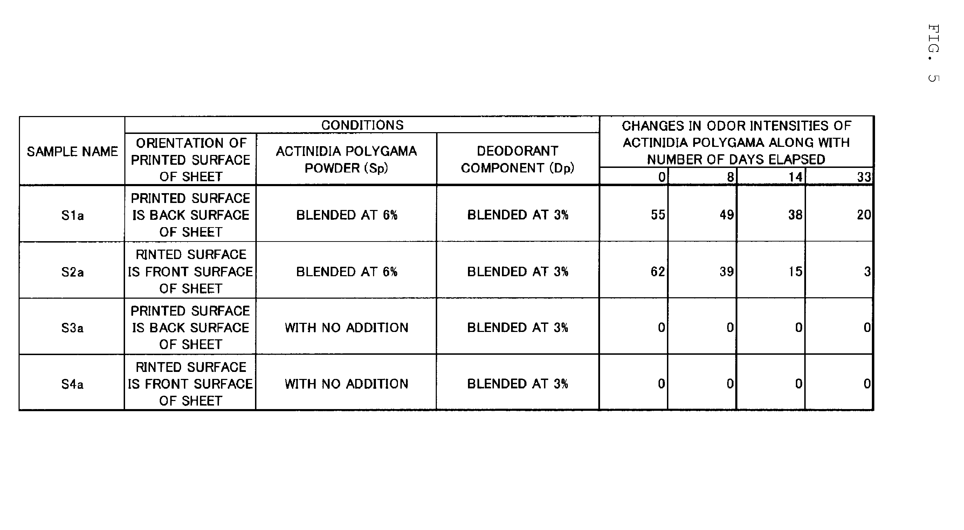

Next, with reference to FIG. 5, a description will be given of a relationship between a printed (applied) surface of the printed layer Lp and an odor intensity of *Actinidia polygama.* FIG. 5 shows a temporal change in the odor intensity of the *Actinidia polygama* on a front surface (for example, the front sheet outer surface Ost) when the *Actinidia polygama* powder Sp or the deodorant component Dp for the printed layer Lp was printed (applied) on (to) the back surface (for example, the front sheet inner surface Ist) or the front surface (for example, the front sheet outer surface Ost) of at least one (for example, the front sheet St) of the two sheets St and Sb used for the cat playing tool 100.

Specifically, four kinds of sheets S1a, S2a, S3a, and S4a were prepared. In the sheet S1a, the *Actinidia polygama* powder Sp at a blending ratio of 6% and the deodorant component Dp at a blending ratio of 3% were printed on the back surface (for example, the front sheet inner surface Ist) of one sheet (for example, the front sheet St). A natural plant extract derived from a natural plant having a structural formula of R¹COOH, R¹CHO, or R¹NH₂ was used as the deodorant component Dp from among plant-based ones (flavonoid, tannin from plants of genus *Diospyros, Ginkgo biloba* extract, *Forsythia viridissima* extract, *Saccharum officinarum extract,* green tea reflux extract, *Cryptomeria japonica bark extract,* plants of genus *Pinus, Camellia japonica, Perilla frutescens extract,* a graft polymerized glucose, and the like) and non-plant-based ones (a betaine compound, a mixture of a betaine compound and polyamine, a surfactant, an antimicrobial agent, an Ag compound, iodine, a vinyl ether, an acid anhydride copolymer, sodium hypochlorite, chlorine dioxide, zeolite, activated carbon, and the like). Note that while natural plants herein refer to plants in their natural states, they also include plants grown artificially or undergone fertilization. Moreover, R¹ represents a hydrocarbon group. In the sheet S2a, the *Actinidia polygama* powder Sp at a blending ratio of 6% and the deodorant component Dp at a blending ratio of 3% are printed
on the front surface (for example, the front sheet outer surface Ost) of one sheet (for example, the front sheet St).
In the sheet S3a, the deodorant component Dp at 3% is printed on the back surface (for example, the front sheet inner surface Ist) of one sheet (for example, the front sheet St).
In the sheet S4a, the deodorant component Dp at a blending ratio of 3% is printed on the front surface (for example, the front sheet outer surface Ost) of one sheet (for example, the front sheet St).

No *Actinidia polygama* powder Sp is printed (applied) on (to) the sheet S3a and the sheet S4a. Thus, the sheet S3a corresponds to the sheet S1a excluding the *Actinidia polygama* powder Sp therefrom, and the sheet S4a corresponds to the sheet S2a excluding the *Actinidia polygama* powder Sp therefrom. In other words, the sheet S3a and the sheet S4a are provided as blank samples in order to find out influences of odor intensities due to the deodorant component Dp on the summed odor intensities of the *Actinidia polygama* powder Sp and the deodorant component Dp measured from the sheet S1a and the sheet S2a, respectively.

Samples (size: 400 mm x 500 mm) in four kinds of states (a brand-new state, a state after the passage of 8 days from the brand-new state at room temperature, a state after the passage of 14 days from the brand-new state at room temperature, and a state after the passage of 33 days from the brand-new state at room temperature) were prepared for each of the sheets S1a, S2a, S3a, and S4a. Each sample was placed on a table; an intake sampling port of an odor intensity measurement device was fixed at a position away from a central portion of the front surface (the front sheet outer surface Ost) of a sample sheet (for example, the front sheet St) by 1 cm; and an odor intensity measurement was conducted. Corrected intensities for the summed odor intensities of the *Actinidia polygama* powder Sp and the deodorant component Dp detected from the sheet S1a and the sheet S2a were obtained by subtracting the odor intensities of the deodorant component Dp detected from the sheet S3a and the sheet S4a as the blank samples therefrom. A portable odor sensor XP-329III (manufactured by NEW COSMOS ELECTRIC CO., LTD.) capable of numerically displaying various odors detectable at an extremely low concentration was employed as the odor intensity measurement device.

As a result of the measurements, during a time period until 33 days have passed at room temperature starting from the brand-new state, it can be confirmed that for the odor of *Actinidia polygama* detected from the front surfaces (for example, the front sheet outer surfaces Ost) of the samples, the odor from the sample with the *Actinidia polygama* powder Sp being printed on the back surface (for example, the front sheet inner surface Ist) of a sheet (for example, the front sheet St) is stronger than that from the sample with the *Actinidia polygama* powder Sp being printed on the front surface (for example, the front sheet outer surface Ost) of a sheet (for example, the front sheet St) as can be seen from FIG. 5.

Next, with reference to FIG. 6, a description will be given of influences of the deodorant component Dp on the odor intensities of *Actinidia polygama* due to differences in the blending ratio of the deodorant component. In other words, the *Actinidia polygama* powder Sp and the deodorant component Dp were printed at a varied ratio on the back surface (for example, the front sheet inner surface Ist) of a sheet (for example, the front sheet St), and a temporal change in the odor intensity of *Actinidia polygama* at the front surface thereof (for example, the front sheet outer surface Ost) was shown in FIG. 6.

Specifically, five kinds of sheets S1b, S2b, S3b, S4b, and S5b were prepared. In the sheet S1b, the Actinidia *polygama* powder Sp at a blending ratio of 6% and the deodorant component Dp at a blending ratio of 0.5% are printed on the back surface of one sheet. In the sheet S2b, while the *Actinidia polygama* powder Sp at 6% is printed on the back surface of one sheet as in the sheet S1b, the deodorant component Dp is printed at a blending ratio of not 0.5% but 1%. In the sheet S3b, while the *Actinidia polygama* powder Sp at a blending ratio of 6% is printed on the back surface thereof as in the sheet S1b and the sheet S2b, the deodorant component Dp at 3% is printed unlike the sheet S1b and the sheet S2b. In the sheet S4b, while the *Actinidia polygama* powder Sp at a blending ratio of 6% is printed on the back surface thereof as in the sheet S1b, the sheet S2b, and the sheet S3b, no deodorant component Dp is printed unlike the sheet S1b, the sheet S2b, and the sheet S3b. In the sheet S5b, neither the *Actinidia polygama* powder Sp nor the deodorant component Dp is printed.

Thus, the sheet S4b corresponds to each of the sheet S1b, the sheet S2b, and the sheet S3b excluding the deodorant component Dp therefrom. In other words, the sheet S4b is provided as a control sample serving to find out an influence due to differences in the concentration of the deodorant component Dp from the odors measured from the sheet S1b, the sheet S2b, and the sheet S3b, respectively. The sheet S5b is provided as a blank sample serving to find out an influence of the *Actinidia polygama* powder Sp and the deodorant component Dp from the odors measured from the sheet S1b, the sheet S2b, the sheet S3b, and the sheet S4b, respectively.

Subsequently, samples (size: 400 mm x 500 mm) in four kinds of states (a brand-new state and states after the passages of 8 days, 14 days, and 33 days from the brand-new state at room temperature, respectively) were prepared for each of the sheets S1b, S2b, S3b, S4b, and S5b as with for the above-described sheets S1a, S2a, S3a, and S4a. Each sample was placed on the table; the intake sampling port of the odor intensity measurement device was fixed at a position away from a central portion of a front surface of a sample sheet by 1 cm; and an odor intensity measurement was conducted. Then, based on the odor intensity detected from the sheet S5b, the odor intensities detected from the sheet S1b, the sheet S2b, the sheet S3b, and the sheet S4b were corrected.

As a result of the measurements, it can be confirmed that although the odor intensity of the *Actinidia polygama* has decreased over the course of days during a time period until 33 days have passed at room temperature starting from the brand-new state, the odor intensities of the *Actinidia polygama* were substantially the same regardless of differences in the blending ratio of the deodorant component Dp (or presence or absence of the deodorant component Dp) as can be seen from FIG. 6.

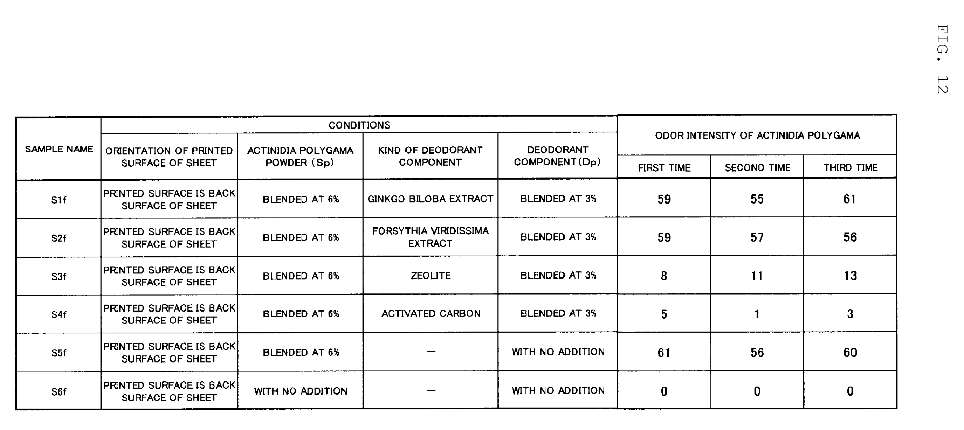

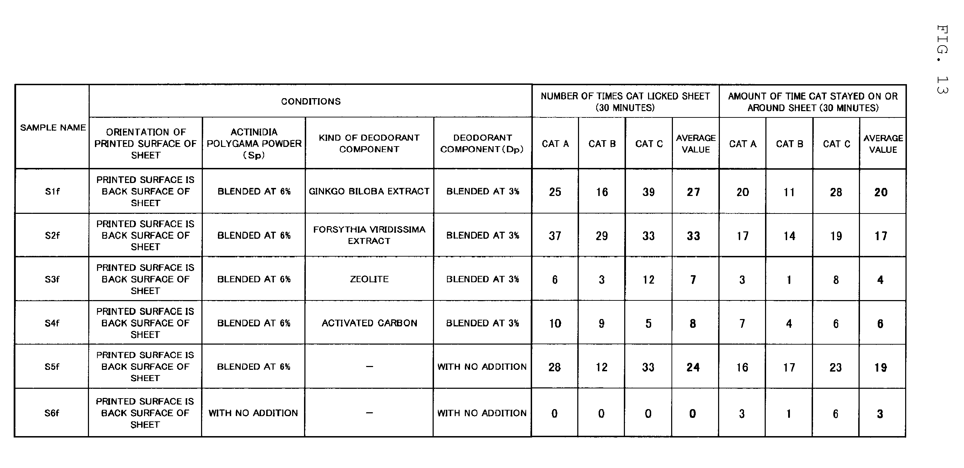

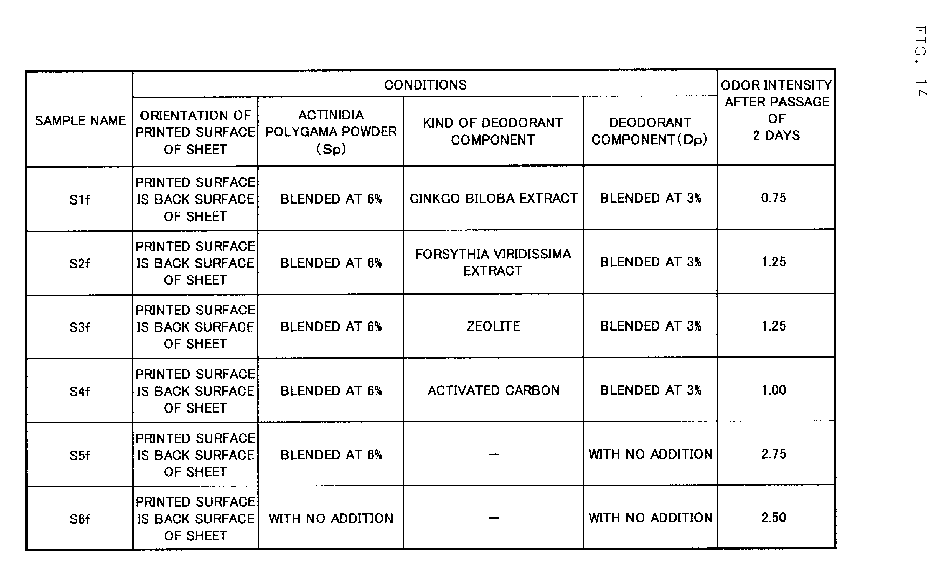

As described above, the temporal change in the odor intensity of the *Actinidia polygama* for each of the samples having the same component and blending ratio of the deodorant component Dp but having the different printed surfaces (front and back) was confirmed as shown in FIG. 5. Moreover, the temporal change in the odor intensity of the *Actinidia polygama* for each of the samples having the same (back) printed surface and having varied blending ratios of the deodorant component Dp was confirmed as shown in FIG. 6. Furthermore, a confirmation test on the deodorant component Dp which does not spoil the odor of *Actinidia polygama* was conducted, and the results thereof were compiled in FIG. 12 and FIG. 13 to be shown below. A confirmation test (sensory evaluation) for deodorizing effects on cat odor by the deodorant components Dp was also conducted, and the results thereof were compiled in FIG. 14 to be shown below.

Before proceeding to an explanation on FIG. 12, the confirmation test on the deodorant component Dp will be described in a specific manner. In order to confirm the deodorant component Dp suitable for the cat playing tool, the odor intensity of *Actinidia polygama* was measured for each of six kinds of samples where printing was made in six kinds of combinations of the *Actinidia polygama* powder Sp at the same blending ratio (6%) and the deodorant components Dp having the same (3%) blending ratio but of different kinds. Specifically, the samples were produced by printing six kinds of combinations made from the *Actinidia polygama* powder Sp and the deodorant components Dp of four kinds on the back surfaces (corresponding to the front sheet inner surfaces Ist) of six sheets S1f, S2f, S3f, S4f, S5f, and S6f (now shown), each corresponding to the front sheet St (FIG. 1).

The *Actinidia polygama* powder Sp (at a blending ratio of 6%) is printed on each of the sheets S1f to S5f. Note that no *Actinidia polygama* powder Sp is printed on the sheet S6f. As the deodorant component Dp (at a blending ratio of 3%), the *Ginkgo biloba* extract, the *Forsythia viridissima* extract, the zeolite, and the activated carbon are printed on the sheets S1f, S2f, S3f, and S4f, respectively. The *Ginkgo biloba* extract and the *Forsythia viridissima* extract each having polyphenols with a hydroxy group on a benzene ring as R¹ in its structural formula were employed. The zeolite in a powder state having a grain diameter of 0.2 mm or less was employed. As the activated carbon, edible bamboo charcoal powders having an average grain diameter of 10 µm were used.

No deodorant component Dp is printed on the sheets S5f and S6f. Thus, only the *Actinidia polygama* powder Sp (at a blending ratio of 6%) is printed on the sheet S5f, and neither the *Actinidia polygama* powder Sp nor the deodorant component Dp is printed on the sheet S6f. In other words, the sheet S5f is provided as a control sample serving to find out influences due to differences in the kind of the deodorant component Dp from the odors measured from the sheet S1f, the sheet S2f, the sheet S3f, and the sheet S4f, respectively. The sheet S6f is provided as a blank sample serving to find out influences of the *Actinidia polygama* powder Sp and the deodorant component Dp from the odors measured from the sheet S1f, the sheet S2f, the sheet S3f, the sheet S4f, and the sheet S5f, respectively.

Note that the odor intensity of *Actinidia polygama* in each of the sheets S1f, S2f, S3f, S4f, S5f, and S6f was measured with a method similar to that used in the odor intensity measurements on the sheets S1b, S2b, S3b, S4b, and S5b described with reference to FIG. 6. Note however that the temporal changes were confirmed in the odor intensity measurements on the sheets S1b, S2b, S3b, S4b, and S5b (FIG. 6), whereas not temporal changes but odor intensities in their brand-new states were repeatedly measured three times for the sheets S1f, S2f, S3f, S4f, S5f, and S6f (main test).

The results of the measurements are shown in FIG. 12. From this figure, the odor intensity of *Actinidia polygama* in the sheet S1f (the *Ginkgo biloba* extract was used as the deodorant component Dp) and that in the sheet S2f (the *Forsythia viridissima* extract was used as the deodorant component Dp) were substantially the same as each other. Furthermore, the odor intensities of *Actinidia polygama* in these sheets S1f and S2f were also substantially the same as that in the sheet S5f (the case where no deodorant component Dp was printed).

In the cases of the sheet S3f (the zeolite was used as the deodorant component Dp) and the sheet S4f (the activated carbon was used as the deodorant component Dp), on the other hand, the odor of *Actinidia polygama* was almost eliminated. In other words, from the standpoint of keeping (not spoiling) the odor intensity of *Actinidia polygama,* it was confirmed that the *Ginkgo biloba* extract and the *Forsythia viridissima* extract have a significant effect over the zeolite and the activated carbon.

Next, influences of the *Actinidia polygama* odor from the above-described sheets S1f, S2f, S3f, S4f, S5f, and S6f on cat actions will be described with reference to FIG. 13. Regarding the cat actions for each of the sheets, subject cats (a cat A, a cat B, and a cat C) were employed and the number of times each subject cat licked each sheet and an amount of time the subject cat stayed on or around the sheet were observed for 30 minutes. Note that the subject cats (the cat A, the cat B, and the cat C) are three male cats at an age of two years old owned by the applicant of the present application.

It can be concluded from FIG. 13 that the effect of the *Actinidia polygama* odor is superior, i.e., the effect of the *Actinidia polygama* odor has not been spoiled by the deodorant component Dp, in the sheet S1f (the *Ginkgo biloba* extract was used as the deodorant component Dp) and the sheet S2f (the *Forsythia viridissima* extract was used as the deodorant component Dp) since the number of times the cat licked the sheet and an amount of time the cat stayed on or around the sheet in each of the sheets S1f and S2f were about the same as those for the sheet S5f (with no addition of any deodorant component). The sheet S3f (the zeolite was used as the deodorant component Dp) and the sheet S4f (the activated carbon was used as the deodorant component Dp) have lower effects of the *Actinidia polygama* odor as compared to the sheets S1f and S2f. The effect of the *Actinidia polygama* odor cannot be recognized since neither the *Actinidia polygama* powder nor the deodorant component is printed on the sheet S6f.

Next, with reference to FIG. 14, an effect of deodorizing cat odor by the deodorant component Dp will be described. FIG. 14 shows evaluations (sensory evaluations) by means of the human sense of smell on the odor intensities of the above-described sheets S1f, S2f, S3f, S4f, S5f, and S6f after the cat has spent days thereon.

Specifically, the condition was such that one sheet was placed in a breeding cage for cats and the cat has spent two days thereon (the sheet in the cage was replaced every two days). Thereafter, four panel members conducted an odor sensory test on the collected sheets. The odor sensory test was conducted by the panel members bringing their noses close to each of the sheets so as to evaluate the odor intensity thereof on a scale of 6 levels. An average value of numerical values from 0 to 5 (see below) corresponding to the evaluations made by the panel members was obtained for each of the sheets, and it was used as an index for a deodorizing effect by the deodorant component Dp of the relevant sheet.
5: Very strong odor that can be noticed without bringing one's nose close to the sheet. It is unable to stand smelling by bringing one's nose close thereto.
4: Strong odor. Although it is possible to bring one's nose thereto, it is unable to stand taking a big breath.
3: Distinct odor.
2: Weak odor.
1: Very weak odor, but a bad odor can be felt upon careful smelling.
0: No bad odor is felt.

From FIG. 14, very weak bad odor was detected from the sheet S1f (the *Ginkgo biloba* extract was used as the deodorant component Dp) and the sheet S2f (the *Forsythia viridissima* extract was used as the deodorant component Dp), and superior deodorizing effects can be therefore confirmed. Moreover, it can be confirmed that the sheet S3f (the zeolite was used as the deodorant component Dp) and the sheet S4f (the activated carbon was used as the deodorant component Dp) also have superior deodorizing effects. From the sheets S5f and S6f with no addition of any deodorant component, on the other hand, bad odor was clearly detected.

It was confirmed from the confirmation tests on the deodorant component Dp whose results are shown in FIGS. 12, 13, and 14 that each of the *Ginkgo biloba* extract and the *Forsythia viridissima* extract has a significant effect of deodorizing cat's bad odor while keeping (not spoiling) the odor intensity of *Actinidia polygama* as compared to the zeolite and the activated carbon.

In general, several methods are conceivable in order to eliminate or reduce odor. The most typical two kinds of methods are a chemical method and a physical method. The *Ginkgo biloba* extract and the *Forsythia viridissima* extract are deodorant components derived from natural plants, and they eliminate or reduce odor with the chemical method. Specifically, it is believed that the deodorant component selectively binds to a bad odor component to be a high polymer, thereby altering the bad odor component. The zeolite and the activated carbon, on the other hand, eliminate or reduce odor with the physical method. Specifically, it is believed that the zeolite and the activated carbon allow odor molecules to be physically adsorbed onto their micropores formed on the particle surfaces thereof.

Looking at the results of FIGS. 12, 13, and 14 from this point of view, substances such as matatabilactone, actinidin, iridomyrmecin, and nepetalactone, which are the major components of the *Actinidia polygama* odor, have larger molecular weights as compared to substances such as ammonia, methyl mercaptan, acetaldehyde, and trimethylamine, which are considered as bad odor components. Therefore, it is believed that they cannot easily bind to substances such as the *Ginkgo biloba* extract and the *Forsythia viridissima* extract.

With respect to those allowing molecules to be physically adsorbed thereto such as the zeolite and the activated carbon, on the other hand, the substances such as matatabilactone, actinidin, iridomyrmecin, and nepetalactone are also captured in the same manner with the bad odor components. In other words, it is believed that the deodorant components derived from the natural plants, as typified by the *Ginkgo biloba* extract and the *Forsythia viridissima* extract, exhibit a deodorizing effect in a selective manner such that they do not show a deodorizing effect on the odor of *Actinidia polygama* but do exhibit a deodorizing effect on the bad odor components having smaller molecular weights. Thus, any deodorant component derived from a natural plant can be used for the cat playing tool according to the present embodiment without being limited to the *Ginkgo biloba* extract and the *Forsythia viridissima* extract in Examples shown in Figs. 12, 13, and 14. In other words, it can be said that a deodorant component performing chemical adsorption can be employed or a deodorant component not performing physical adsorption can be used.

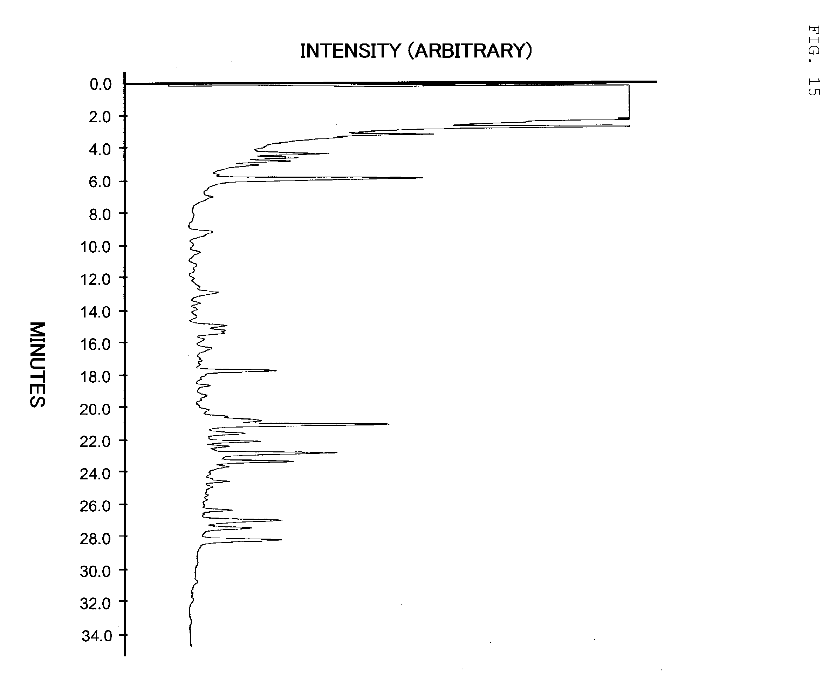

This point will be described further in detail. Results obtained by making analysis by means of a gas chromatograph (manufactured by Shimadzu Corporation) are shown in FIGS. 15, 16, 17, and 18. A capillary column (DB17) with a size of 0.53 mm x 30 m was used, helium gas was used as a carrier gas, and the pressure used was 120 kPa. Respective injection amounts of samples were 2 µL. For the analysis, a sample was injected to the capillary column at 120°C and the capillary column was kept at that temperature for ten minutes. Thereafter, a programmed temperature analysis with a temperature increase rate of 5°C/min from 120°C to 200°C was conducted. After the temperature has reached to 200°C, the analysis was conducted while keeping the temperature at 200°C.

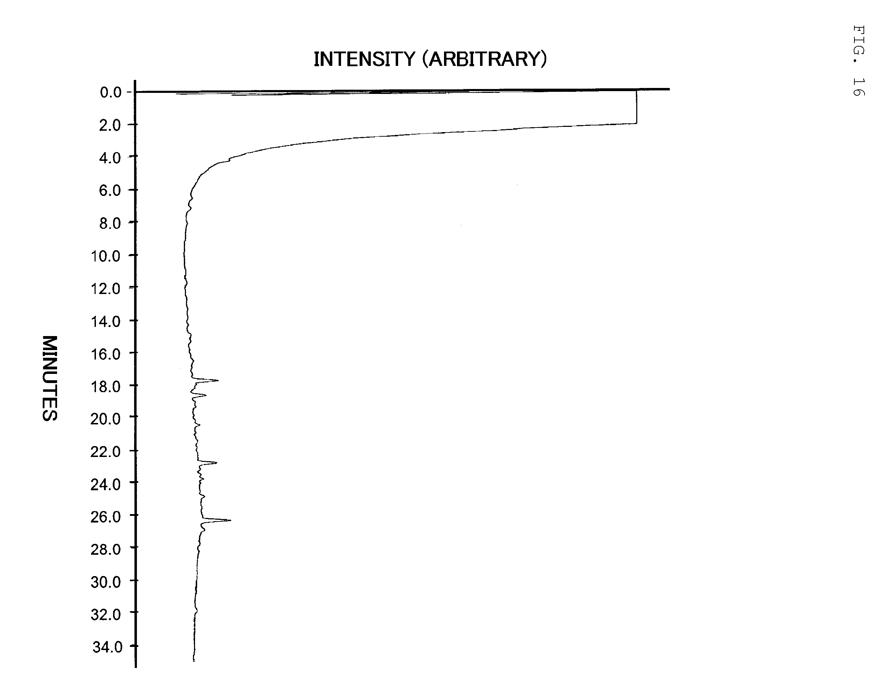

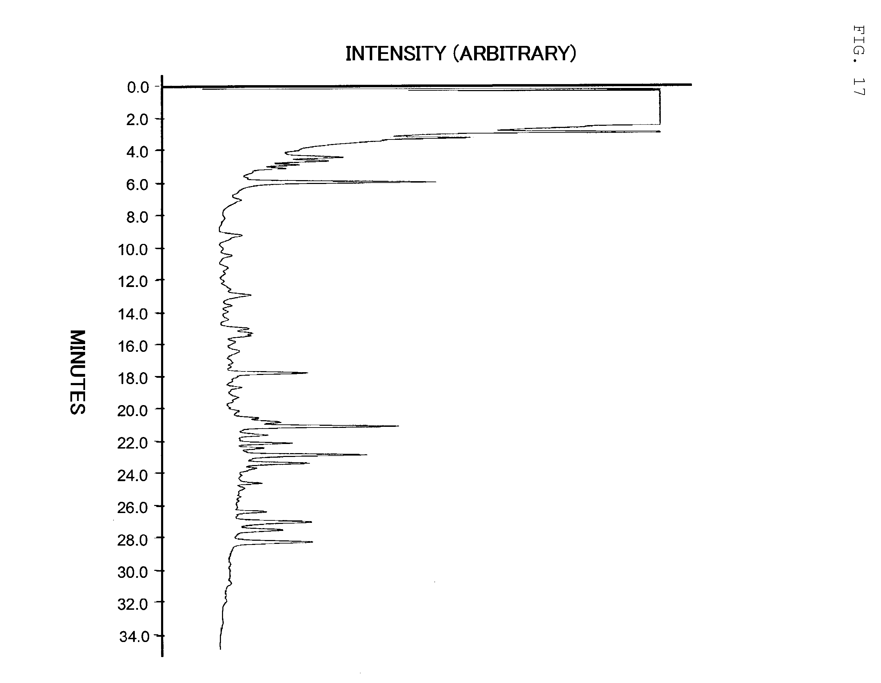

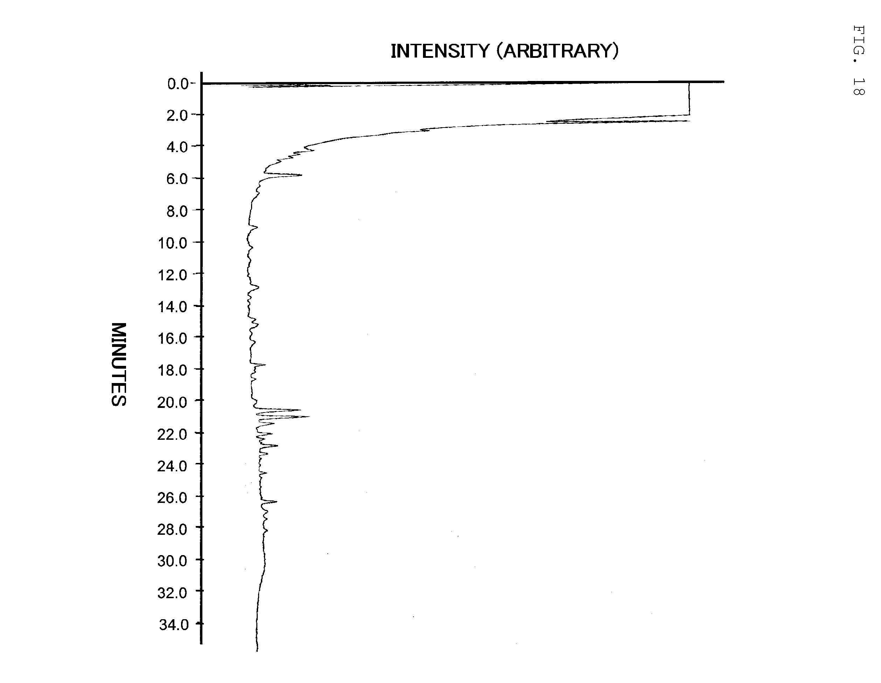

The following four kinds of samples were used.
(1) A solution obtained by dissolving about 30 mg of the *Actinidia polygama* powder into 5 mL of ethanol (FIG. 15).
(2) A solution obtained by dissolving about 15 mg of the deodorant component derived from a natural plant into 5 mL of ethanol (FIG. 16).
(3) A solution obtained by dissolving a mixture of about 30 mg of the *Actinidia polygama* powder and about 15 mg of the deodorant component derived from the natural plant into 5 mL of ethanol (FIG. 17).
(4) A solution obtained by dissolving a mixture of about 30 mg of the *Actinidia polygama* powder and about 15 mg of the activated carbon into 5 mL of ethanol (FIG. 18).

With reference to FIG. 15, it is believed that a large peak occurred before about two minutes of detection time were passed is of ethanol. The same thing applies to all of the results (from FIG. 15 to FIG. 18). Many components were detected from the solution of the *Actinidia polygama* powder during a time period up to 35 minutes (200°C).

With reference to FIG. 16, the deodorant component derived from the natural plant had no large peak observed while small peaks existed around 18 minutes, around 23 minutes, and around 26 minutes.

FIG. 17 shows the analysis results for the solution of the mixture of the *Actinidia polygama* powder and the deodorant component derived from the natural plant, and the solution has substantially the same components, except for the binder component, as those of the coating material to be printed on the sheet of the cat playing tool according to the present invention. Comparing this test result with that for the case of the solution of the *Actinidia polygama* powder alone in FIG. 15, the intensities of the peaks have not been changed from those for the case of the *Actinidia polygama* powder alone with respect to almost all of the peaks.

FIG. 18 shows the analysis results for the solution of the mixture of the *Actinidia polygama* powder and the activated carbon. Comparing FIG. 18 with FIG. 15 showing the results for the *Actinidia polygama* powder alone, it can be seen that many of the components of the *Actinidia polygama* powder were not detected. This result well agrees with that of the test on the odor intensity of *Actinidia polygama* shown in FIG. 12, and shows that the activated carbon adsorbed the odor components of the *Actinidia polygama* powder in spite of under the condition facilitating elution with ethanol.

Thus, a deodorant component employed in the present invention is a deodorant component not performing physical adsorption. In other words, it can be said that a deodorant component (compound) derived from a natural plant according to the present invention is a component which does not adsorb the odor component of the *Actinidia polygama* powder even when used together with the *Actinidia polygama* powder (FIG. 17) but does deodorize a bad odor component (FIG. 14).

A desired natural plant from which a deodorant component is extracted is a natural plant with a fragrance compound having any one of a carboxyl group, a formyl group, and an amino group. More specifically, these fragrance compounds can be represented as R¹COOH, R¹CHO, and R¹NH₂. Note that R¹ represents hydrocarbon. Moreover, it is only necessary to include at least one of these components. All of the three kinds or the two kinds need not be included simultaneously.

Examples of the natural plant from which the above-described fragrance compound (deodorant component) can be extracted include natural plants as follows. For example, those include *Osmanthus x fortunei, Paulownia tomentosa, Farfugium japonicum, Forsythia viridissima, Syringa vulgaris, Petasites japonicus, Diospyros kaki, Quercus serrata, Populus sieboldii,* plants of class *Pteridopsida, Fraxinus lanuginose, Ficus carica, Osmunda japonica, Plantago asiatica, plants of* genus *Artemisia, Acer palmatum, Lagerstroemia indica, Lespedeza japonica, Oxalis corymbosa, Houttuynia cordata, Pinus thunbergii, Quercus acutissima, Tilia japonica, Photinia glabra, plants of* genus *Asparagus, Forsythia suspensa, Ginkgo biloba, Loropetalum chinense, Cercidiphyllum japonicum, Weigela hortensis, Pieris japonica, Forsythia viridissima,* plants of genus *Quercus,* plants of genus *Populus,* plants of genus *Prunus*, Cinnamomum camphora, plants of genus *Acacia,* plants of genus *Rhododendron,* plants of genus *Abelia,* Salix babylonica, plants of genus *Salix,* plants of genus *Pinus, Cryptomeria japonica, Abies firma, Tsuga sieboldii, Pinus parviflora, Sequoia sempervirens, Metasequoia glyptostroboides, Abies homolepis, Abies sachalinensis, Picea glehnii, Picea jezoensis,* plants of genus *Picea, Pinus densiflora, Pinus koraiensis, Pinus parviflora, Pinus parviflora, Pinus thunbergii,* and *Pinus pumila.* In other words, the fragrance compounds derived from these natural plants can be utilized as the deodorant components in the cat playing tool of the present embodiment.

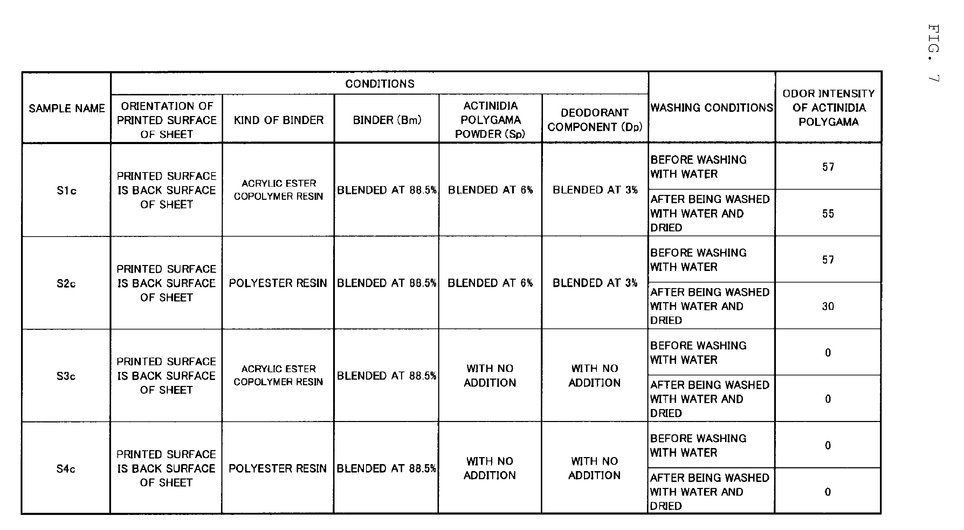

Next, with reference to FIG.7, a description will be given of the fixation of the *Actinidia polygama* powder Sp when the printed layer Lp is printed using the binder Bm having a high level of fastness. FIG. 7 shows the degree of changes (reductions) in the odor intensities of *Actinidia polygama* between before and after washing with water those obtained by printing and fixing the *Actinidia polygama* powders Sp on the back surfaces (for example, the front sheet inner surfaces Ist) of the sheets (for example, the front sheets St) using the binders Bm having different levels of fastness.

Specifically, four kinds of sheets S1c, S2c, S3c, and S4c were prepared. In the sheet S1c, the *Actinidia polygama* powder Sp at a blending ratio of 6% and the deodorant component Dp at a blending ratio of 3% were printed on the back surface of one sheet using the binder Bm having a high level of fastness. Specifically, an acrylic ester copolymer resin having a high level of fastness was selected as the binder Bm from among an acrylic ester copolymer resin, a methacrylic resin, a urethane resin, a silicon resin, a glyoxal resin, a polyvinyl acetate resin, a vinylidene chloride resin, a butadiene resin, a melamine resin, an epoxy resin, an acrylic-silicon copolymer resin, an ethylene-vinyl acetate copolymer resin, an isobutylene-maleic anhydride copolymer resin, an ethylene-styrene-acrylate-methacrylate copolymer resin, and the like. The acrylic ester copolymer resin was used at a blending ratio of 88.5%. The binder Bm can be used with a blending ratio in a range of 5% or more and 99% or less. In the sheet S2c, the *Actinidia polygama* powder Sp at a blending ratio of 6% and the deodorant component Dp at a blending ratio of 3% were printed on the back surface of one sheet as in the sheet S1c using the normal binder Bm. Specifically, the binder Bm was composed of a polyester resin, and was used at a blending ratio of 88.5%.

In the sheet S3c, neither the *Actinidia polygama* powder Sp nor the deodorant component Dp was printed, and only the binder Bm having a high level of fastness employed in the sheet S1c was printed on the back surface thereof at a blending ratio of 88.5%. In the sheet S4c, neither the *Actinidia polygama* powder Sp nor the deodorant component Dp was printed as in the sheet S3c and only the normal binder Bm employed in the sheet S2c was printed at a blending ratio of 88.5%. The sheet S2c was provided as a control sample for the sheet S1c serving to find out an influence due to a difference in the binder Bm.

The sheet S3c and the sheet S4c correspond to the sheet S1c and the sheet S2c, respectively, excluding the *Actinidia polygama* powder Sp and the deodorant component Dp therefrom. In other words, the sheet S3c and the sheet S4c were provided as blank samples serving to find out influences of the *Actinidia polygama* powder Sp and the deodorant component Dp from the odors measured from the sheet S1c and the sheet S2c, respectively.

The odor intensity of *Actinidia polygama* from each of the thus prepared sheets S1c, S2c, S3c, and S4c (size: 400 mm x 500 mm) was detected in the same manner as that described above. Thereafter, each of the sheets was soaked in about 5 L of water contained in a bucket having a volume of about 10 L for 30 minutes. Thereafter, the soaked sheet was washed by hand for about one minute, the water was squeezed out from the sheet, and then the sheet was dried for 30 minutes in a drier set at 50°C. The dried sheet was spread over a table, and the odor intensity thereof was measured with the same method as that described above. Note that the odor intensities of *Actinidia polygama* detected from the sheets S1c and S2c were corrected by the odor intensities detected from the sheets S3c and S4c as the respective blank samples.

As a result of the measurements, it is confirmed that there was little decline in the odor intensity (corrected value) of *Actinidia polygama* in the sheet S1c using the binder Bm having a high level of fastness even between times before and after the washing although the odor intensity (corrected value) of *Actinidia polygama* in the sheet S2c using the normal binder Bm was reduced to about a half between the times before and after the washing as can be seen from FIG. 7. Thus, it is understood that the printed layer Lp can be fixed to the sheet (either the front sheet St or the back sheet Sb) in a stable manner by using the binder Bm of the acrylic ester copolymer resin having a high level of fastness in the present example.

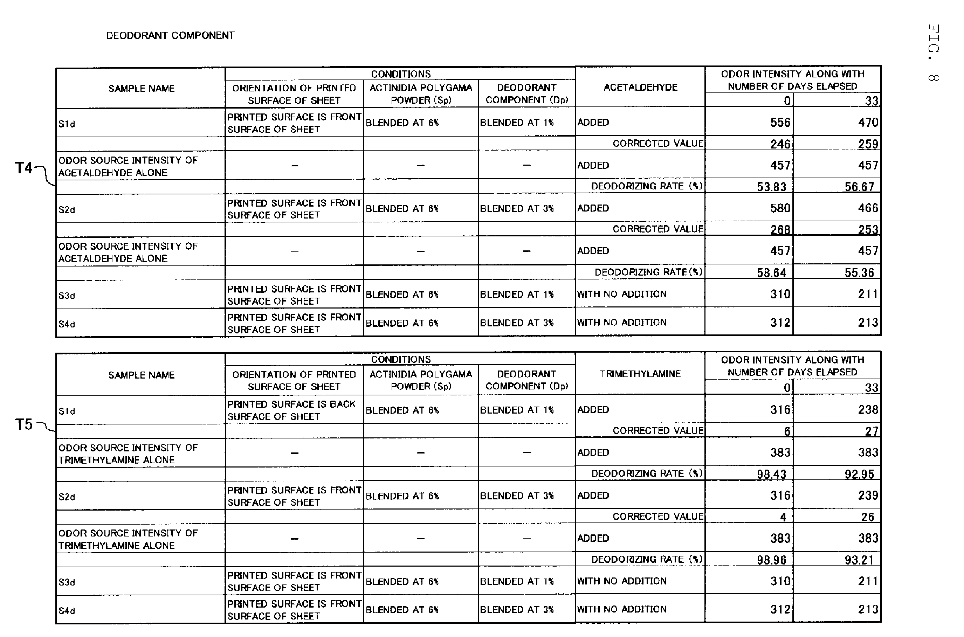

Next, with reference to FIG. 8, a description will be given of an effect of deodorizing cat odor by the deodorant component Dp. FIG. 8 shows temporal changes in detected odor intensities when the *Actinidia polygama* powder Sp at the same blending ratio and the deodorant component Dp at a different blending ratio were printed on the front surfaces (for example, the front sheet outer surfaces Ost) of sheets (for example, the front sheets St) and different bad odor components were added thereto.

Specifically, four kinds of sheets S1d, S2d, S3d, and S4d were prepared. The *Actinidia polygama* powder Sp at a blending ratio of 6% and the deodorant components Dp at respective blending ratios of 0.5%, 1%, and 3% were printed on the front surfaces of the sheets S1d, S2d, S3d, and S4d. While a bad odor component was added to the sheets S1d and S2d, no bad odor component was added to the sheets S3d and S4d. In other words, the sheets S3d and S4d were provided as blank samples serving to find out influences of the bad odor component on the sheets S1d and S2d, respectively.

Samples (size: 100 mm x 400 mm) in two kinds of states (a brand-new state and a state after the passage of 33 days from the brand-new state at room temperature) were prepared for each of the sheets S1d, S2d, S3d, and S4d. Each of the samples was subjected to a treatment with an odor source solution, immediately placed on the bottom of a desiccator having a volume of 2 L, sealed therein, and allowed to stand for 30 minutes at room temperature. Thereafter, the intake sampling port of the odor intensity measurement device was inserted from the top of the desiccator, and the odor intensity therein was measured. Note that the bad odor intensities detected from the respective samples were corrected by being subtracted by the intensities indicated in the blank samples. In FIG. 8, the results obtained when acetaldehyde and trimethylamine were used as the bad odor components are shown in Table T4 and Table T5, respectively.

From Table T4, in cases where an acetaldehyde treatment was performed on the sheet S1d and the sheet S2d on which the deodorant component Dp was printed at respective blending ratios of 1% and 3%, deodorizing rates in both cases exceeded 50%. Thus, the deodorizing effects thereof can be confirmed. Moreover, from Table T5, in cases where a trimethylamine treatment was performed on the sheet S1d and the sheet S2d on which the deodorant component Dp was printed at respective blending ratios of 1% and 3%, deodorizing rates in both cases exceeded 98%. Thus, excellent deodorizing effects can be confirmed. In other words, the blending ratio of the deodorant component Dp is preferably in a range of 0.1% or more and 10% or less, and more preferably in a range of 0.5% or more and 5% or less. Note that the deodorizing effect cannot be obtained when the blending ratio is 0.1% or less. At a blending ratio of 10% or more, there is no need to increase the blending ratio since the deodorizing rate becomes constant over that range. Thus, there is no need to contain the deodorant component at 10% or more also from an economic point of view.

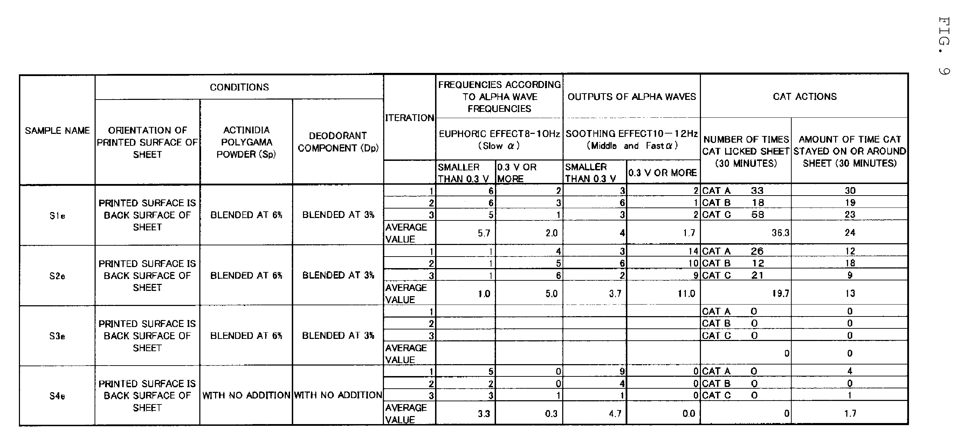

Next, with reference to FIG. 9, a description will be given of soothing effects given to cat brains by the odor of *Actinidia polygama.* Although the brain waves of the cat placed on the cat playing tool 100 have already been described with reference to FIGS. 3 and 4, cat actions will also be described here together with cat brain waves. FIG. 9 shows effects of a brand-new sheet on which the *Actinidia polygama* powder Sp and the deodorant component Dp were printed at respective predetermined blending ratios and such a sheet after the passage of 33 days on cats.

Specifically, four kinds of sheets S1e, S2e, S3e, and S4e were prepared. The sheet S1e is a brand-new sheet with the *Actinidia polygama* powder Sp at a blending ratio of 6% and the deodorant component Dp at a blending ratio of 3% being printed on the back surface thereof. The sheet S2e corresponds to the sheet S1e obtained after the passage of 33 days at room temperature. The sheet S3e likewise corresponds to the sheet S1e obtained after the passage of 40 days at room temperature. The sheet S4e is a sheet with neither the *Actinidia polygama* powder Sp nor the deodorant component Dp being printed thereto. In other words, the sheet S4e is provided as a blank sample for the sheets S1e, S2e, and S3e.

Each of the thus prepared sheets S1e, S2e, S3e, and S4e as sample sheets was placed on the lap of a person who sat on a chair in a room that cuts off any external stimulus (such as noise); the person held a subject cat in arms on that sheet; and the subject cat was brought to a relaxed state. Note that the subject cats are the above-described three male cats at an age of two years old (the cat A, the cat B, and the cat C). A positive electrode for measuring brain waves was attached to the subject cat A at one position in a central region at the top of the head and a negative electrode and a GRD electrode were attached to the inside of the right ear with the application of an electrode paste. Then, the brain wave of the cat was measured for about two minutes. After the measurement, the occurrence frequencies and magnitude of basic pattern waves (brain wave components of an alpha wave: Slow α, and Middle α and Fast α) were extracted completely within a range of 24 seconds. Average values of three such iterations were calculated. Note that the brain wave measurements were conducted by using a cathode-ray oscilloscope (manufactured by Sanei-Sokki K.K.) installed in a shielding room that shields electromagnetic waves and by collecting output signals by means of waveform analyzers (NR-500 and NR-HA08 manufactured by Keyence Corporation) for two minutes and analyzing them. Note that the brain wave measurement was not conducted regarding the sheet S3e. For the cat actions with respect to the sheets, the cat A, the cat B, and the cat C were employed. The number of times each of the cats licked each of the sheets and an amount of time the cat stayed on or around the sheet were observed for 30 minutes.

From FIG. 9, as compared to the sheet S4e, the occurrence frequency of the alpha waves in the cat and the output thereof were increased with each of the sheets S1e and S2e. Especially the frequency of the Slow α, which is increased when a euphoric effect begins to appear, was increased. Also with the cat actions, an action of licking the sheets and an action of playing on or around the sheets were notably observed. Thus, the result of the cat actions was linked with that of the alpha wave occurrence frequencies in the brain waves. In other words, a brain wave (such as the Slow α) close to a euphoric state, which substantially coincides with a medical knowledge of human brain waves, was recognized by the odor of *Actinidia polygama.* In the case of the sheet S3e, an action of licking the sheet and an action of playing on or around the sheet were not observed at all. Thus, it can be concluded that the effect of the *Actinidia polygama* odor had already been deactivated.

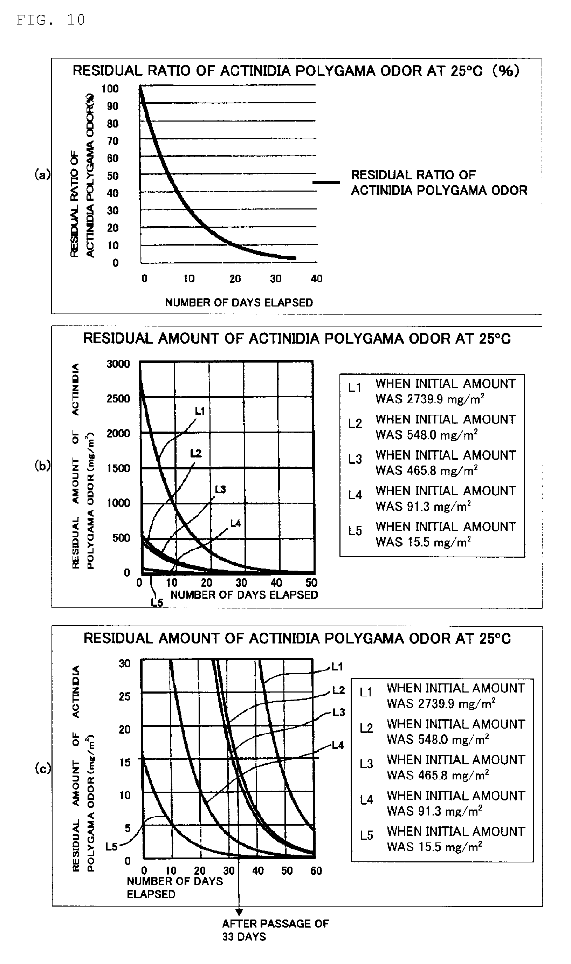

Next, with reference to FIG. 10, a description will be given of changes in the residual ratio of the Actinidia *polygama* odor over time. FIG. 10(a) shows the residual ratio (%) of the *Actinidia polygama* odor and the number of days elapsed when the odor components of *Actinidia polygama* were allowed to be naturally evaporated from the *Actinidia polygama* powder Sp at room temperature (25°C). In this figure, the vertical axis shows the residual ratio (%) of the Actinidia *polygama* odor, and the horizontal axis shows the number of days elapsed. In other words, the residual ratio of the *Actinidia polygama* odor is rapidly decreased to about 30% before the passage of the 10th day and gradually decreased to reach zero around the 35th day, with the case where the number of days elapsed is zero being 100%.

FIG. 10(b) shows temporal changes in a residual amount of the *Actinidia polygama* odor at room temperature (25°C) in a case where the printed (applied) amount of the *Actinidia polygama* powder Sp is varied. Note that the residual amount of the *Actinidia polygama* odor is calculated based on the amount of the *Actinidia polygama* powder Sp printed on the sheet and the amount of the solid after being dried. In this figure, the vertical axis shows the residual amount (mg/m²) of the *Actinidia polygama* odor, and the horizontal axis shows the number of days elapsed. A line L1, a line L2, a line L3, a line L4, and a line L5 show changes in the residual amount of the *Actinidia polygama* odor due to the passage of days in a case where the residual amounts of the *Actinidia polygama* odor when the number of days elapsed is zero are 2739.9 mg/m², 548.0 mg/m², 465.8 mg/m², 91.3 mg/m², and 15.5 mg/m², respectively. When the residual amount of the *Actinidia polygama* odor was smaller than 15.0 mg/m², the cat did not show any reaction to that sheet. Thus, the inventor of the present application confirmed that the residual amount of the *Actinidia polygama* odor at 15.0 mg/m² is an effective threshold value for the *Actinidia polygama* odor on cats. Thus, there were examined the number of days for each of the initial residual amounts of the *Actinidia polygama* odor when the number of days elapsed is zero, i.e., 2739.9 mg/m², 548.0 mg/m², 465.8 mg/m², 91.3 mg/m², and 15.5 mg/m², to take until it was reduced to the effective threshold value of 15.0 g/m².

FIG. 10(c) is shown in a manner such that the scale of the vertical axis is made finer than that in FIG. 10(b) and the scale of the horizontal axis is made coarser than that in FIG. 10(b). As shown in this figure, it can be seen that the number of days taken until being decayed to the effective threshold value of 15.0 mg/m² is: about 47 days for the case of the line L1 (the initial residual amount of the Actinidia *polygama* odor is 2739.9 mg/m²); about 33 days for the case of the line L2 (the initial residual amount of the Actinidia *polygama* odor is 548.0 mg/m²); about 31 days for the case of the line L3 (the initial residual amount of the Actinidia *polygama* odor is 465.8 mg/m²); and about 16 days for the case of the line L4 (the initial residual amount of the Actinidia *polygama* odor is 91.3 mg/m²).

Therefore, the printed (applied) amount of the Actinidia *polygama* powder Sp in the cat playing tool 100 is set to be the lower limit value of the residual amount of the Actinidia *polygama* odor or the effective threshold value of 15.0 mg/ m² as. Although an increase in the number of effective days is expected as the upper limit value becomes greater, 2739.9 mg/m² is set as the upper limit value for the residual amount of the *Actinidia polygama* odor at this time in view of the technical constraint in the screen printing (a relationship between the coarseness of a screen and the particle size of *Actinidia polygama*). In other words, the printed (applied) amount of the *Actinidia polygama* powder Sp is preferably in a range of 15.0 mg/m² or more and 2739.9 mg/m² or less, and more preferably in a range of 18.3 mg/m² or more and 146.1 mg/m² or less as the residual amount of the *Actinidia polygama* odor.

In order to prevent a cat from putting its hand inside the bag of the cat playing tool 100 with the printed layer Lp being applied therein, the hem portion Ph strongly fixes the peripheries of the front sheet St and the back sheet Sb together by means of lock stitching or the like. However, as long as it is possible to accomplish an aim of protecting the printed layer Lp applied to the inner wall of the cat playing tool 100 from cats, the peripheries of the front sheet St and the back sheet Sb may be simply stitched together or bonded together with an adhesive instead of the hem portion Ph. The front sheet St and the back sheet Sb may be stitched together so as to be tenser than that with a bias tape or piping. Moreover, the front sheet St and the back sheet Sb may be obtained, not as separate two sheets, but by folding back one long sheet. Also, the front sheet St and the back sheet Sb may have a bag shape with one side thereof being opened.

Moreover, the cat playing tool 100 is not limited to the configuration in a rectangular mat shape shown in FIG. 1. It can be configured in various shapes as described above. Moreover, as shown in FIG. 11(a), presentation as a commercial product can be improved by printing the printed layer Lp having a desired pattern on the front sheet St or the back sheet Sb.

FIG. 11(b) shows an example of possible shapes of the cat playing tool 100. A transparent or opaque sheet may be added to the upper side of the cat playing tool 100 to form an envelope shape or a tent or dome shape. Alternatively, it may be configured to have a handkerchief or bandanna shape. Furthermore, it can be configured to have an animal-resembled shape or a body pillow shape.

### Industrial Applicability

The present invention can be used as a cat playing tool. Reference Signs List

- 100: cat playing tool
- St: front sheet
- Sb: back sheet
- Lp: printed layer
- Sp: *Actinidia polygama* powder
- Dp: deodorant component
- Bm: binder

## Claims

1. A cat playing tool comprising a printed layer prepared by applying an *Actinidia polygama* powder, a deodorant component, and a binder.

2. The cat playing tool according to claim 1, wherein the printed layer is held by at least one of two sheets (a first sheet and a second sheet).

3. The cat playing tool according to claim 2, wherein the first sheet and the second sheet are joined together at peripheries thereof so as to form a bag shape holding the printed layer therein.

4. The cat playing tool according to any one of claims 1 to 3, wherein the deodorant component does not perform physical adsorption.

5. The cat playing tool according to any one of claims 1 to 4, wherein the deodorant component is a compound derived from a natural plant having any one of structural formulas of R¹COOH, R¹CHO, and R¹NH₂ (wherein R¹ represents a hydrocarbon group).
